Europäisches Patentamt

European Patent Office

Office européen des brevets

(19)

(11) Publication number : **0 687 743 A1**

# (12) EUROPEAN PATENT APPLICATION

(21) Application number : 95109247.7

(22) Date of filing : 14.06.95

(51) Int. Cl.⁶ : **C22C 21/08**, C22F 1/05, B60R 19/03

(30) Priority : 16.06.94 JP 157884/94
27.04.95 JP 103764/95

(43) Date of publication of application :
20.12.95 Bulletin 95/51

(84) Designated Contracting States :
DE FR GB

(71) Applicant : THE FURUKAWA ELECTRIC CO., LTD.
6-1, Marunouchi 2-chome
Chiyoda-ku
Tokyo 100 (JP)

(72) Inventor : Matsuoka, Tatsuru
3-37-16, Kamiigusa,
Suginami-ku
Tokyo (JP)
Inventor : Ichinose, Akira
1321-1, Nakakuki,
Oyama-shi
Tochigi-ken (JP)

(74) Representative : TER MEER - MÜLLER - STEINMEISTER & PARTNER
Mauerkircherstrasse 45
D-81679 München (DE)

(54) Aluminum alloy bumper-reinforcing material and method of producing the same

(57) The invention provides an aluminum alloy bumper-reinforcing material with excellent strength and bending processibility and a method of producing the same, characterized in that, after an aluminum alloy ingot comprising 0.5 to 1.2 wt. % of Mg, 0.4 to 1.0 wt. % of Si, 0.3 to 0.9 wt. % of Cu, not more than 0.4 wt. % of Fe, further one or not less than two kinds selected from a group consisting of 0.05 to 0.5 wt. % of Mn, 0.05 to 0.25 wt. % of Cr, 0.005 to 0.30 wt. % of Ti and 0.03 to 0.25 wt. % of Zr, and the balance of Al and inevitable impurities was subject to homogenizing treatment at a temperature of not lower than 480 °C and not higher than melting point, it is hot extruded and cooled at a cooling velocity of not slower than 3 °C/min for the solid solution treatment and hardening treatment, and then it is provided with the bending processing and the artificial aging treatment at a temperature of 150 to 210 °C within 8 hours after hardening to make the size of precipitates not larger than 50 μm and the number thereof not less than 3 grains/mm².

Fig. 2

EP 0 687 743 A1

## BACKGROUND OF THE INVENTION

The present invention relates to a bumper-reinforcing material for motorcars and a method of producing the same. In more detail, it relates to an aluminum alloy bumper-reinforcing material constituted with an aluminum alloy hollow shape having hollow sections and being excellent in the strength and bending processibility and a method of producing the same.

In recent years, a demand for lightening of motorcars has become increasingly strong, and conversion of motorcar parts to aluminum has been promoted remarkably.

As to the bumper for motorcars, a changeover from steel to synthetic resin has been advanced, but, into this synthetic resin bumper, the reinforcing material is being integrated to increase the strength of bumper.

For this reinforcing material, steel shape has been used conventionally, but, for making the motorcars more light in weight, extruded shape of aluminum alloy has become to be used as a reinforcing material.

As examples using extruded shape of aluminum alloy as a reinforcing material of bumper, Japanese Unexamined Patent Publication Nos. Hei 5-278537 and Hei 3-200452 are disclosed.

These aluminum alloys to be used for bumper-reinforcing material include JIS A6063 alloy, JIS A6N01 alloy, JIS A7003 alloy and JIS A7108 alloy, which are relatively low-strength alloys among 6000 series and 7000 series alloys.

The aluminum alloy bumper-reinforcing material is produced by providing with bending processing, drilling processing, aging treatment, etc. to the extruded material of said alloy.

Since light weight as much as possible and high strength and easy bending processing are required for the sectional form, the aluminum alloy hollow shapes are adopted in many cases, and hollow shapes with two-tier hollow sections and with three-tier hollow sections are used principally.

Alloys adopted extensively as those being extrudable into said sectional forms and having high strength are 6000 series alloys, and, thereamong, T6 material of A6061 alloy is used mainly.

However, even with T6 material of A6061 alloy, the maximum attainable strength in the yield point that poses the most serious problem as a reinforcing material is around 300 N/mm$^2$, which is insufficient in the aspect of impingement strength compared with iron type, etc.

Moreover, the bumper-reinforcing material is needed to be bent at the ends with small radius, fitting to the form of car body, but the hollow shape of T6 material of A6061 alloy has a difficulty also in the point of bending property and a problem in the aspect of production cost as well.

As a result of diligent investigations in view of such situation, an aluminum alloy bumper-reinforcing material with excellent strength and bending processibility and low production cost and a method of producing the same have been developed according to the invention.

## SUMMARY OF THE INVENTION

The invention of claim 1 provides an aluminum alloy bumper-reinforcing material characterized in that it is constituted with an aluminum alloy hollow shape comprising 0.5 to 1.2 wt. % of Mg, 0.4 to 1.0 wt. % of Si, 0.3 to 0.9 wt. % of Cu, not more than 0.4 wt. % of Fe and the balance of Al and inevitable impurities, with the size of precipitates being not larger than 50 μm and the number thereof being not less than 3 grains/mm$^2$.

Moreover, the invention of claim 2 provides an aluminum alloy bumper-reinforcing material characterized in that it is constituted with an aluminum alloy hollow shape comprising 0.5 to 1.2 wt. % of Mg. 0.4 to 1.0 wt. % of Si, 0.3 to 0.9 wt. % of Cu, not more than 0.4 wt. % of Fe, further one or not less than two kinds selected from a group consisting of 0.05 to 0.5 wt. % of Mn, 0.05 to 0.25 wt. % of Cr, 0.005 to 0.30 wt. % of Ti and 0.03 to 0.25 wt. % of Zr, and the balance of Al and inevitable impurities, with the size of precipitates being not larger than 50 μm and the number thereof being not less than 3 grains/mm$^2$.

In the inventions of claim 1 and claim 2, the form of aluminum alloy hollow shape is desirable to have a plurality of hollow sections and, above all, a form with three-tier hollow sections is desirable.

One of the production methods of the inventive materials of claim 1 and claim 2 is a method of producing aluminum alloy bumper-reinforcing material characterized in that, after an aluminum alloy ingot having given alloy composition aforementioned was subject to homogenizing treatment at a temperature of not lower than 480 °C and not higher than melting point, it is hot extruded and cooled at a cooling velocity of not slower than 3 °C/sec for the solid solution treatment and hardening treatment, and then it is provided with the artificial aging treatment at a temperature of 150 to 210 °C within 8 hours after hardening to make the size of precipitates not larger than 50 μm and the number thereof not less than 3 grains/mm$^2$, followed by bending processing.

Moreover, another production method of the inventive materials is a method of producing aluminum alloy bumper-reinforcing material characterized in that, after an aluminum alloy ingot having given alloy composition aforementioned was subject to homogenizing treatment at a temperature of not lower than 480 °C and not higher than melting point, it is hot extruded and cooled at a cooling velocity of not slower than 3 °C/min for the solid solution treatment and hardening treatment, and then it is provided with the bending processing and the artificial aging treatment at a temperature of 150 to 210 °C within 8 hours after hardening to make the size of precipitates not larger than 50 μm and the number thereof not less than 3 grains/mm$^2$.

## BRIEF DESCRIPTION OF THE DRAWING

Fig. 1 is a cross section showing one example of the inventive reinforcing material.
Fig. 2 is an oblique view of the inventive reinforcing material provided with the bending processing.

## DETAILED DESCRIPTION OF THE INVENTION

First, the reason why the alloy composition of aluminum alloy hollow shape was restricted as described above in the invention will be explained.

Both Mg and Si improve he strength of material due to precipitation hardening, but, if under 0.5 wt. % and under 0.4 wt. %, then the effect is insufficient. When Mg exceeds 1.2 wt. % and when Si exceeds 1.0 wt. %, the extrudability decreases, resulting in difficult production of thin-wall extruded shape as well as extremely low extruding speed.

Cu forms the solid solution in alloy to effect the improvement in strength, but, if under 0.3 wt. %, then the effect is insufficient and, if over 0.9 wt. %, it incurs drastically decreased life of extrusion die and decreased corrosion resistance.

Fe incorporates as an impurity, but, if over 0.4 wt. %, it incurs decreased extrudability and bending processibility.

Mn, Cr and Zr all have an effect for preventing the recrystallization particularly in the vicinity of surface layer of extruded shape, which is effective for making the crystal grains fine. If Mn is under 0.05 wt. %, if Cr is under 0.05 wt. % and if Zr is under 0.03 wt. %, then the effect is insufficient. When Mn exceeds 0.5 wt. %, when Cr exceeds 0.25 wt. % and when Zr exceeds 0.25 wt. %, coarse crystallized matters are produced, resulting in a cause of cracking at the time of bending processing.

Ti has an effect for making the crystals fine on casting and also an effect for preventing the recrystallization of extruded shape, but, if under 0.005 wt. %, then the effects are insufficient and, if exceeding 0.30 wt. %, coarse crystallized matters are produced resulting in decreased bending processibility.

Next, the production method of the invention will be explained.

The reason why the temperature of homogenizing treatment of ingot was made to be not lower than 480 °C and not higher than melting point in the invention is because of that, at a temperature under 480 °C, the formation of solid solution of intermetallic compounds such as Mg$_2$Si is insufficient, thereby incurring the decreased mechanical properties of final extruded material.

The reason why the cooling velocity after hot extrusion was made to be not slower than 3 °C/sec is because of that, at a cooling velocity under 3 °C/sec, coarse precipitates of Mg$_2$Si etc. are produced during cooling and, even if providing with the artificial aging treatment thereafter, only low strength may be obtained.

The fact that the time of natural aging period was set to be within 8 hours is the most important feature of the inventive production method. The reason why it was made to be within 8 hours is because of that, in the alloys concerned in the invention, the precipitation of Mg$_2$Si etc. advances during allowing to stand at room temperature (during natural aging) and, even if carrying out the artificial aging treatment, the attainable strength may end up to decrease.

In the invention, the size and the number of said precipitates have significant effects on the strength and bending processibility. The reason why the size of precipitates was made to be not larger than 50 μm and the number not less than 3 grains/mm$^2$ is because of that, with such coarse precipitates that become over 50 μm in size and under 3 grains/mm$^2$ in number, sufficient strength cannot be obtained and the bending processibility decreases as well.

The reason why the artificial aging treatment is provided at a temperature of 150 to 210 °C is due to that, at a temperature under 150 °C, even if carrying out the artificial aging treatment, sufficient strength may not be obtained and also, in the case of exceeding 210 °C, sufficient strength cannot be obtained.

The production methods of claim 5 and claim 7 refer to the production method when the extrusion and the bending processing are performed at different places, and the production methods of claim 6 and claim 8 refer to the production method when the extrusion and the bending processing are performed at the same place. In either case, if the artificial aging treatment is not provided within 8 hours after the solid solution treatment and hardening treatment to be given at the time of extrusion, sufficient strength and bending processibility will not be obtained.

In following, the invention will be illustrated in more detail based on the examples.

Example

Aluminum alloy ingots with different alloy compositions as shown in Table 1 were manufactured through continuous casting process. After having been subject to homogenizing treatment under the conditions shown in Table 1, they were extruded at a temperature of 500 °C to obtain hollow shapes with three hollow sections.

The cooling velocity after extrusion, the time of natural aging treatment and the conditions of artificial aging treatment are also put down in Table 1.

Sampling from the hollow shapes obtained, the size and the number of precipitates were examined under electron microscope.

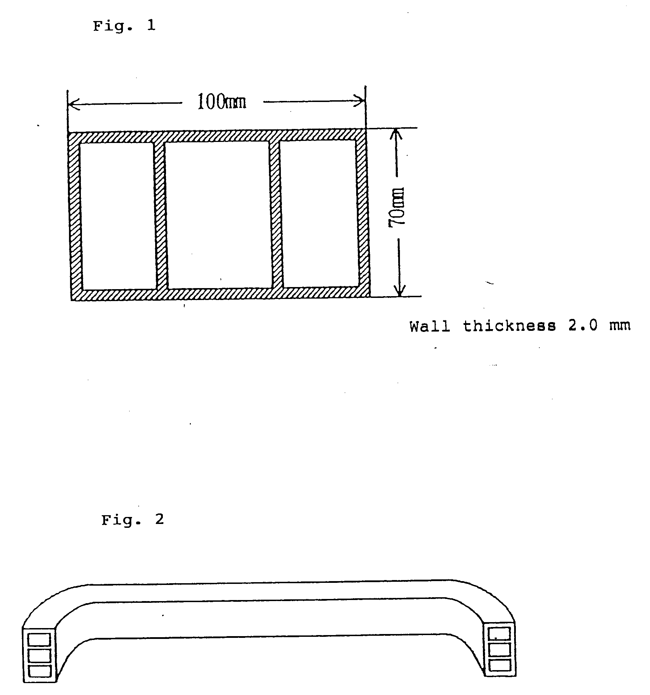

With the same specimens, the mechanical properties were confirmed with tensile-testing machine. At the same time, the bending processing was provided to the ends at 40 °C with inside radius of 130 mm as shown in Fig. 2, using a rotary draw-bending device, to examine the existence of fracture at that time. Moreover, the reinforcing materials with both ends bent were mounted to the front area of car with body weight of 1600 kg to comparatively examine the elastic region displacement and permanent deformation by pendulum testing. The pendulum was applied from the top side in Fig. 1 and the condition of velocity was made to be 8 km/hour. These results are put down in Table 1.

Table 1

| | No. | Alloy composition (wt. %) | | | | | | | | Temp. of homoge-nizing treatment (°C) | Cooling velocity after extrusion (°C/sec) | Natu-ral aging time (h) | Condi-tions of arti-ficial aging treat-ment | Precipitates | | mechanical properties | | | Existance of occur-rence of bending fracture | Permanent deforma-tion by pendulum testing (mm) |
|---|---|---|---|---|---|---|---|---|---|---|---|---|---|---|---|---|---|---|---|---|
| | | Si | Fe | Mn | Mg | Cu | Cr | Ti | Zr | | | | | Size (µm) | Number (grains/mm²) | Tensile strength (N/mm²) | Yield point (N/mm²) | Elon-gation (%) | | |
| Inventive reinforcing material | 1 | 0.5 | 0.2 | 0.1 | 0.7 | 0.4 | – | 0.01 | 0.1 | 520 | 6 | 2 | 180 | 15 | 16 | 390 | 330 | 18 | None | 14 |
| | 2 | 0.7 | 0.2 | – | 0.9 | 0.6 | 0.01 | 0.01 | – | 540 | 8 | 4 | 190 | 9 | 30 | 420 | 350 | 17 | None | 10 |
| | 3 | 0.9 | 0.1 | 0.3 | 1.1 | 0.8 | 0.01 | 0.01 | – | 500 | 8 | 7 | 170 | 35 | 10 | 450 | 380 | 15 | None | 5 |
| | 4 | 0.8 | 0.1 | 0.1 | 0.8 | 0.6 | – | 0.01 | 0.2 | 500 | 4 | 3 | 180 | 40 | 5 | 400 | 340 | 16 | None | 12 |
| | 5 | 0.7 | 0.2 | – | 0.9 | 0.6 | 0.01 | 0.01 | – | 540 | 8 | 4 | 160 | 8 | 29 | 400 | 340 | 18 | None | 10 |
| Comparative reinforcing material | 6 | 0.7 | 0.2 | – | 0.9 | 0.6 | – | 0.01 | – | 460 | 8 | 4 | 180 | 75 | 2 | 370 | 290 | 10 | Crack | 38 |
| | 7 | 0.7 | 0.2 | – | 0.9 | 0.6 | – | 0.01 | – | 540 | 1 | 4 | 190 | 60 | 4 | 330 | 240 | 12 | None | 86 |
| | 8 | 0.7 | 0.2 | – | 0.9 | 0.6 | – | 0.01 | – | 540 | 8 | 72 | 170 | 65 | 10 | 360 | 280 | 12 | None | 55 |
| | 9 | 0.9 | 0.1 | 0.3 | 1.1 | 0.8 | 0.01 | 0.01 | – | 500 | 8 | 12 | 180 | 70 | 8 | 400 | 310 | 8 | None | 28 |
| | 10 | 0.7 | 0.2 | – | 0.9 | 0.6 | 0.01 | 0.01 | – | 540 | 8 | 4 | 140 | 10 | 20 | 360 | 270 | 14 | None | 60 |
| | 11 | 0.7 | 0.2 | – | 0.9 | 0.6 | 0.01 | 0.01 | – | 540 | 8 | 4 | 220 | 70 | 8 | 340 | 260 | 10 | Crack | 75 |
| Conventional reinforcing material | 12 | 0.3 | 0.2 | – | 0.6 | – | – | 0.01 | – | 520 | 6 | 2 | 180 | 15 | 8 | 240 | 180 | 14 | None | 130 |
| | 13 | 0.7 | 0.2 | 0.3 | 0.9 | 0.20 | – | 0.01 | – | 520 | 6 | 2 | 180 | 25 | 8 | 310 | 250 | 10 | Crack | 75 |

(Note)  No. 12 corresponds to A6063 alloy.

No. 13 corresponds to A6061 alloy.

As evident from table 1, the inventive reinforcing materials have excellent strength and elongation, generate no bending fracture at the time of bending processing, and show 15 mm or less of permanent deformation by pendulum testing, which is a problemless range in the design of common cars.

Whereas, it can be seen that the comparative reinforcing materials being out of the range of the inventive production method are poor in the mechanical properties and bending processibility.

As described above, the aluminum alloy bumper-reinforcing material in accordance with the invention is excellent in the strength and bending processibility and can contribute to the lightening of motorcars, exerting conspicuous effect industrially.

## Claims

(1) An aluminum alloy bumper-reinforcing material constituted with an aluminum alloy hollow shape comprising 0.5 to 1.2 wt. % of Mg, 0.4 to 1.0 wt. % of Si, 0.3 to 0.9 wt. % of Cu, not more than 0.4 wt. % of Fe and the balance of Al and inevitable impurities, with the size of precipitates being not larger than 50 $\mu$m and the number thereof being not less than 3 grains/mm$^2$.

(2) An aluminum alloy bumper-reinforcing material constituted with an aluminum alloy hollow shape comprising 0.5 to 1.2 wt. % of Mg. 0.4 to 1.0 wt. % of Si, 0.3 to 0.9 wt. % of Cu, not more than 0.4 wt. % of Fe, further one or not less than two kinds selected from a group consisting of 0.05 to 0.5 wt. % of Mn, 0.05 to 0.25 wt. % of Cr, 0.005 to 0.30 wt. % of Ti and 0.03 to 0.2 wt. % of Zr, and the balance of Al and inevitable impurities, with the size of precipitates being not larger than 50 $\mu$m and the number thereof being not less than 3 grains/mm$^2$.

(3) The aluminum alloy bumper-reinforcing material of claim 1 or claim 2, wherein the aluminum alloy hollow shape has a plurality of hollow sections.

(4) The aluminum alloy bumper-reinforcing material of any of claim 1 through claim 3, wherein the aluminum alloy hollow shape has three hollow sections.

(5) A method of producing aluminum alloy bumper-reinforcing material comprising the steps that, after an aluminum alloy ingot comprising 0.5 to 1.2 wt. % of Mg, 0.4 to 1.0 wt. % of Si, 0.3 to 0.9 wt. % of Cu, not more than 0.4 wt. % of Fe and the balance of Al and inevitable impurities was subject to homogenizing treatment at a temperature of not lower than 480 °C and not higher than melting point, it is hot extruded and cooled at a cooling velocity of not slower than 3 °C/sec for the solid solution treatment and hardening treatment, and then it is provided with the artificial aging treatment at a temperature of 150 to 210 °C within 8 hours after hardening to make the size of precipitates not larger than 50 $\mu$m and the number thereof not less than 3 grains/mm$^2$, followed by bending processing.

(6) A method of producing aluminum alloy bumper-reinforcing material comprising the steps that, after an aluminum alloy ingot comprising 0.5 to 1.2 wt. % of Mg, 0.4 to 1.0 wt. % of Si, 0.3 to 0.9 wt. % of Cu, not more than 0.4 wt. % of Fe and the balance of Al and inevitable impurities was subject to homogenizing treatment at a temperature of not lower than 480 °C and not higher than melting point, it is hot extruded and cooled at a cooling velocity of not slower than 3 °C/min for the solid solution treatment and hardening treatment, and then it is provided with the bending processing and the artificial aging treatment at a temperature of 150 to 210 °C within 8 hours after hardening to make the size of precipitates not larger than 50 $\mu$m and the number thereof not less than 3 grains/mm$^2$.

(7) A method of producing aluminum alloy bumper- reinforcing material comprising the steps that, after an aluminum alloy ingot comprising 0.5 to 1.2 wt. % of Mg, 0.4 to 1.0 wt. % of Si, 0.3 to 0.9 wt. % of Cu, not more than 0.4 wt. % of Fe, further one or not less than two kinds selected from a group consisting of 0.05 to 0.5 wt. % of Mn, 0.05 to 0.25 wt. % of Cr, 0.005 to 0.30 wt. % of Ti and 0.03 to 0.25 wt. % of Zr, and the balance of Al and inevitable impurities was subject to homogenizing treatment at a temperature of not lower than 480 °C and not higher than melting point, it is hot extruded and cooled at a cooling velocity of not slower than 3 °C/sec for the solid solution treatment and hardening treatment, and then it is provided with the artificial aging treatment at a temperature of 150 to 210 °C within 8 hours after hardening to make the size of precipitates not larger than 50 $\mu$m and the number thereof not less than 3 grains/mm$^2$, followed by bending processing.

(8) A method of producing aluminum alloy bumper-reinforcing material comprising the steps that, after an aluminum alloy ingot comprising 0.5 to 1.2 wt. % of Mg, 0.4 to 1.0 wt. % of Si, 0.3 to 0.9 wt. % of Cu, not more than 0.4 wt. % of Fe, further one or not less than two kinds selected from a group consisting of 0.05 to 0.5 wt. % of Mn, 0.05 to 0.25 wt. % of Cr, 0.005 to 0.30 wt. % of Ti and 0.03 to 0.25 wt. % of Zr, and the balance of Al and inevitable impurities was subject to homogenizing treatment at a temperature of not lower than 480 °C and not higher than melting point, it is hot extruded and cooled at a cooling velocity of not slower than 3 °C/min for the solid solution treatment and hardening treatment, and then it is provided with the bending processing and the artificial aging treatment at a temperature of 150 to 210 °C within 8 hours after hardening to make the size of precipitates not larger than 50 $\mu$m and the number thereof not less than 3 grains/mm$^2$.

Fig. 1

Wall thickness 2.0 mm

Fig. 2

## EUROPEAN SEARCH REPORT

**European Patent Office**

Application Number
EP 95 10 9247

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 018 no. 242 (C-1197) ,10 May 1994 & JP-A-06 025783 (KOBE STEEL LTD) 1 February 1994, * abstract * | 1-8 | C22C21/08 C22F1/05 B60R19/03 |
| A | FR-A-2 360 684 (ALUMINUM CO OF AMERICA) 3 March 1978 * page 5, line 19 - line 25; claim 1 * | 1,2,5-8 | |
| A | WO-A-93 02220 (ALCAN INT LTD) 4 February 1993 * page 6, paragraph 2; claims 1-3; example 1 * | 1,2,5-8 | |
| A | EP-A-0 081 950 (ALCAN INT LTD) 22 June 1983 * page 8, line 1 - line 13 * | 5-8 | |
| A | FR-A-2 287 365 (CEGEDUR) 7 May 1976 * claim 1 * | 1,2,5-8 | TECHNICAL FIELDS SEARCHED (Int.Cl.6) C22C C22F B60R |

The present search report has been drawn up for all claims

| Place of search | Date of completion of the search | Examiner |
|---|---|---|
| THE HAGUE | 4 September 1995 | Gregg, N |

EPO FORM 1503 03.82 (P04C01)